# EUROPEAN PATENT SPECIFICATION

(11) **EP 0 646 068 B1**
(45) Date of publication and mention of the grant of the patent: **04.06.1997**
(21) Application number: 92900137.8
(22) Date of filing: 12.12.1991
(51) Int. Cl.: B60C 11/16

(54) **ANTI-SKID STUD**
GLEITSCHUTZSTIFT
CRAMPON ANTI-DERAPAGE

(30) Priority: 14.12.1990 FI 906197
(43) Date of publication of application: 05.04.1995
(73) Proprietor: TAITI OY, 00370 Helsinki (FI)
(72) Inventor: Teeri, Niilo Heikki, 00350 Helsinki (FI)
(74) Representative: Jennings, Nigel Robin
(86) International application number: FI9100383
(87) International publication number: WO9210374

(56) References cited:
- FI-B- 49 264
- FI-B- 82 907
- PATENT ABSTRACTS OF JAPAN, Vol. 9, No. 152, M391; & JP,A,60 029 307, publ 1985- 02-14 (TOSHIO HORIGUCHI).

## Description

This invention relates to anti-skid studs as specified in the preamble of Claim 1. Such anti-skid studs are well known from the state of the art.

Anti-skid studs for vehicle tires are largely based on the principle of a spike projecting out from the tire and being made up of a thin hard-metal stud, 2 - 3 mm in diameter, which is surrounded in a varying manner by metal or plastic or by a combination of the two. All of them have the disadvantage that the small hard-metal tip subjects the road to a relatively high surface pressure, which wears an ice-free road, and that, on the other hand, its grip is very poor on a thin so-called black ice surface, which the tip of the stud cannot penetrate. As a result, a stud, rounded by wear, will skate on the ice surface, with a friction coefficient even lower than that of rubber.

An anti-skid stud according to the present invention reduces the disadvantages referred to above. To this end, an anti-skid stud in accordance with the present invention is characterised by the features specified in the characterising part of Claim 1. A special embodiment is claimed in Claim 2.

The invention is described below in greater detail with reference to the drawings, in which:
Figures 1 and 5 depict each a vertical section of a side elevation of an anti-skid stud according to the invention;
Figure 2 depicts the anti-skid stud installed in a vehicle tire, the tire part being at rest or rolling against an icy road surface;
Figure 3 depicts the anti-skid stud in a vehicle tire against the road surface when braking force or some other horizontal force is acting between the road and the tire;
Figure 4 depicts the wide and deep contact area produced by the anti-skid stud in an icy road surface at the time of braking or acceleration, or when the vehicle tends, for example, to side-slip.

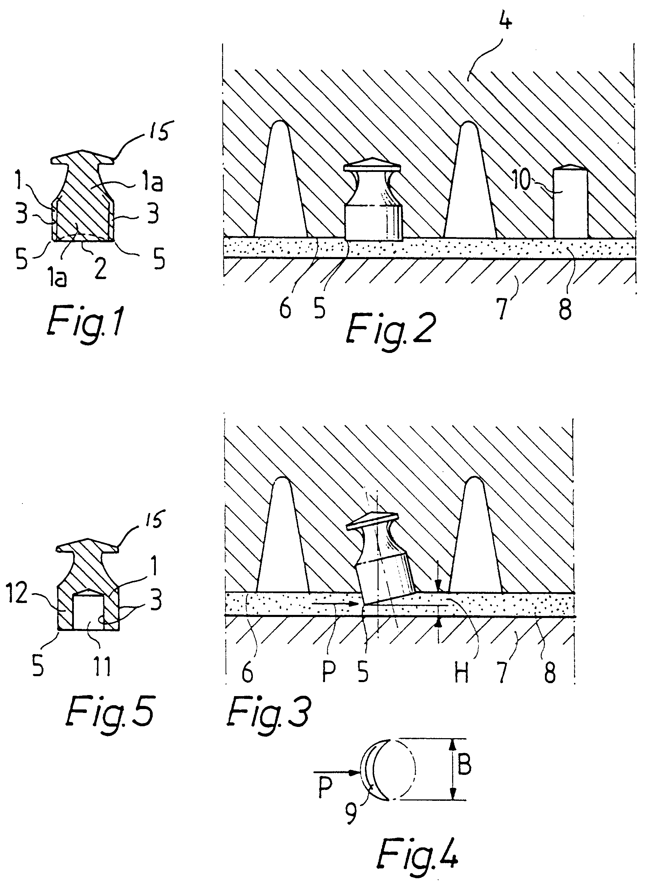

An anti-skid stud according to the invention is characterised in that the fastening flanged (15) anti-skid stud (Figures 1 and 5), installed in a vehicle tire in a conventional manner, has no conventional hard-metal pin; the anti-skid tip 1 of the stud has in the gripping area 5 a diameter (in general 5... 12 mm) which is large in comparison with the total length of the anti-skid stud. In Figure 1 the tip of the stud constitutes a concave or straight surface 2, in which case its road contact is primarily annular and wide when the stud is in its basic position perpendicular to the road surface (Figure 2). Owing to the width of the contact area, the surface pressure against the road is relatively low. The core part, i.e. the body material 1a, of the anti-skid stud is not so hard as its mantle surface 3, and this prevents the tip 2 of the stud from obtaining a convex shape as the stud wears down.

Anti-skid studs according to the invention are placed in a vehicle tire in a conventional manner, installed in bed-holes 10 prepared in advance in the tire tread rubber 4 (Figure 2), i.e. around the whole tire, in a suitable number, usually the maximum number permitted in the regulations. Unloaded, the annular tip 5 of the anti-skid stud protrudes somewhat from the surface 6 of the vehicle tire. In Figure 2 the tire is pressed by the weight of the vehicle against the ice surface 8 on the road surface 7, whereupon the annular tip 5 of the anti-skid stud will penetrate somewhat into the ice surface 8. When the vehicle is travelling, without acceleration or braking, on a road covered with glare ice, the anti-skid stud is in its stand-by position in accordance with Figure 2. When there is braking, acceleration or, for example, a danger of sideslipping, the stud tilts under the action of an external force P (Figure 3). Owing to the tilting of the stud, its annular tip 5 tends outward from the tire tread 6, against the direction of movement, whereupon the tip 5 of the stud will form a wide, claw-like obstacle which will penetrate into the ice, i.e. producing a chisel-like grip which effectively reduces the danger of sideslipping and skidding. Figure 4 depicts the shape of the impression 9 caused by the stud tip 5, the shape being oriented against the tendency to skid and having width B and depth H (Figure 3).

The anti-skid stud according to Figure 1 is made of a material which can be processed so as to be hard on its surface, for example of cemented steel with a cementation depth of approx. 1 mm and a surface hardness of over 800 HV within the area 3, the core part 1a which will wear into a concave shape remaining softer. The tip part 2 which will wear so as to obtain a concave shape can be left uncemented, in which case it will initially operate as a straight plane and will gradually wear into a concave shape, or it can be machined into a concave shape after the cementation. Although an anti-skid stud thus made is somewhat heavier than conventional studs, owing to its greater exterior diameter, its road-wearing action is considerably less than that of conventional studs, owing to the considerably lower surface pressure against the road surface during normal rolling. However, in a skid situation the grip against the road is good. The material of the anti-skid stud may also be some other material which can be processed to be hard on its exterior surface but is lighter than cemented steel.

In an anti-skid stud according to Figure 5, made of a suitably hard material or of a material which can be processed so as to be hard, the concavity 2 in Figure 1 has been replaced by a void 11, which will maintain the straightness of the tip 5 and its annular contact with the road surface during rolling. For example, rapid steel, cemented steel, and various ceramic materials are suitable materials. Made in this manner, for example the weight of an anti-skid stud made of cemented steel may be reduced and the hardest possible cementation is obtained for almost all of the material 12 coming into contact with the road, as cementation also takes place inside the void 11. The void 11 may, when necessary, be filled up with some lightweight material softer than the material 12.

## Claims

1. An anti-skid stud, provided with a fastening flange (15), to be installed in a conventional manner in a bed-hole (10) prepared in advance in the tread of a vehicle tire, characterised in that the tip (2) of the tip part (1), equal or somewhat smaller in diameter than the fastening flange of the anti-skid stud, is flat or concave, and that the grip of the anti-skid stud against a slippery road surface (8) occurs when the edge (5) of the tip (2) of the anti-skid stud projects from the surface (6 of the vehicle tire to a greater extent than in its stand-by position (Figure 2) when the anti-skid studs tilts, under the action of an external force (P) during braking, for example, whereupon the projecting edge (5) of the tip part will produce a wide (B in Figure 4) grip, deeper (H in Figure 3) than in the stand-by position of the stud, against the icy road surface.

2. An anti-skid stud according to Claim 1, characterised in that in the anti-skid stud the central part of that area of the anti-skid tip part (1) which comes into contact with the road surface is provided with a void (11) to prevent the tip from obtaining a convex shape during wear, or that the mantle surface (3) of the tip part (1) is, to a suitable depth, of a material more resistant to wear, i.e. primarily harder than the core material of the tip part (1), the tip of the tip part, when thus implemented, not obtaining a convex shape under the effect of wear during driving but obtaining a concave shape on its surface (2) or remaining almost flat.

## Patentansprüche

1. Gleitschutzstift, der mit einem Befestigungsflansch (15) versehen ist, um auf herkömmliche Weise in einer im voraus in der Lauffläche eines Fahrzeugreifens hergestellten Einbettungsöffnung (10) eingebracht zu werden, dadurch gekennzeichnet, daß das vordere Ende (2) des vorderen Teils (1) gleichen oder etwas kleineren Durchmesser als der Befestigungsflansch des Gleitschutzstiftes aufweist, flach oder konkav ist, und daß die Haftung des Gleitschutzstiftes auf einer glatten Straßenoberfläche (8) dann auftritt, wenn die Kante (5) des vorderen Endes (2) des Gleitschutzstiftes von der Oberfläche (6) des Fahrzeugreifens in größerem Ausmaß als in seiner Bereitschaftsposition (Figur 2) vorragt wenn der Gleitschutzstift kippt, beispielsweise unter Einwirkung einer äußeren Kraft (P) beim Bremsen, woraufhin die vorragende Kante (5) des vorderen Teil eine breiten (B in Figur 4) Haftung, tiefer (H in Figur 3) als bei der Bereitschaftsposition des Stiftes, auf der eisigen Straßenoberfläche erzeugt.

2. Gleitschutzstift nach Anspruch 1, dadurch gekennzeichnet, daß beim Gleitschutzstift der mittlere Teil jenes Bereiches des Gleitschutzvorderteils (1), welcher in Berührung mit der Straßenoberfläche kommt, mit einer Ausnehmung (11) versehen ist, um zu verhindern, daß das vordere Ende beim Verschleiß eine konvexe Form annimmt, oder daß die Manteloberfläche (3) des vorderen Teils (1) bis zu einer geeigneten Tiefe aus einem Material besteht, das verschleißfester, d.h. in erster Linie härter, als das Kernmaterial des vorderen Teils (1) ist, wobei das vordere Ende des vorderen Teils, wenn es derart ausgeführt ist, unter der Verschleißeinwirkung beim Fahren keine konvexe Gestalt annimmt, sondern an seiner Oberfläche (2) eine konkave Gestalt annimmt oder beinahe flach bleibt.

## Revendications

1. Crampon antidérapant, pourvu d'une bride de fixation (15), devant être installé de manière classique dans un trou (10) ménagé à l'avance dans la bande de roulement d'un pneu de véhicule, caractérisé en ce que l'extrémité (2) de la tête (1), de diamètre égal ou légèrement inférieur à celui de la bride de fixation du crampon antidérapant, est plate ou concave, et en ce que le crampon antidérapant adhère à une surface de route glissante (8) lorsque le bord (5) de l'extrémité (2) du crampon antidérapant fait saillie de la surface (6) du pneu de véhicule davantage que dans sa position de repos (Fig. 2) lorsque le crampon antidérapant est incliné, sous l'action d'une force extérieure (P) au cours du freinage, par exemple, au cours duquel le bord saillant (5) de la tête assurera une forte adhérence (B sur la Fig. 4), plus profonde (H sur la Fig. 3) que dans la position de repos du crampon, à la surface de route verglacée.

2. Crampon antidérapant suivant la revendication 1, caractérisé en ce que dans le crampon antidérapant, la partie centrale de la zone de la tête antidérapante (1) qui vient en contact avec la surface de la route comporte un évidement (11) afin d'empêcher que l'extrémité ne prenne une forme convexe avec l'usure, ou en ce que la surface extérieure (3) de la tête (1) est faite, jusqu'à une profondeur appropriée, d'une matière plus résistante à l'usure, c'est-à-dire principalement plus dure que la matière de base de la tête (1), l'extrémité de la tête, ainsi réalisée, ne prenant pas une forme convexe sous l'effet de l'usure au cours du roulement, mais prenant une forme concave sur sa surface (2) ou restant presque plate.
